# EUROPEAN PATENT SPECIFICATION

(11) **EP 4 115 143 B1**
(45) Date of publication and mention of the grant of the patent: **06.05.2026**
(21) Application number: 21720170.6
(22) Date of filing: 03.03.2021
(51) Int. Cl.: G01B 21/20, G01B 11/30, G01B 17/06, G01B 17/08, G01B 5/00, G01N 21/958

(54) **METHOD OF CONTACTLESS DETERMINATION OF GEOMETRIC ACCURACY OF THE SHAPE OF SPATIALLY CURVED AUTOMOTIVE GLASS IN A POSITION CORRESPONDING TO THE POSITION OF A GLASS MOUNTED ON THE CAR BODY AND A DEVICE FOR PERFORMING THE METHOD**
VERFAHREN ZUR BERÜHRUNGSLOSEN BESTIMMUNG DER GEOMETRISCHEN GENAUIGKEIT DER FORM VON RÄUMLICH GEKRÜMMTEM AUTOMOBILGLAS IN EINER POSITION, DIE DER POSITION EINES AN DER KAROSSERIE MONTIERTEN GLASES ENTSPRICHT, UND VORRICHTUNG ZUR DURCHFÜHRUNG DES VERFAHRENS
PROCÉDÉ DE DÉTERMINATION SANS CONTACT DE LA PRÉCISION GÉOMÉTRIQUE DE LA FORME D'UN VERRE AUTOMOBILE COURBÉ MONTÉ DANS UNE POSITION CORRESPONDANT À LA POSITION D'UN VERRE ASSEMBLÉ SUR LA CARROSSERIE D'UNE VOITURE ET DISPOSITIF POUR LA MISE EN OEUVRE DU PROCÉDÉ

(30) Priority: 05.03.2020 CZ 20200113
(43) Date of publication of application: 11.01.2023
(73) Proprietor: FOR G s.r.o., 419 01 Duchcov (CZ); Technicka univerzita v Liberci, 460 01 Liberec, Liberec I-Stare Mesto (CZ)
(72) Inventor: HORAK, Marcel, 460 05 Liberec, Liberec V-Kristianov (CZ); NOVOTNY, Frantisek, 460 01 Liberec, Liberec XII-Stare Pavlovice (CZ); STARY, Michal, 460 01 Liberec, Liberec XIII-Nove Pavlovice (CZ); VRATNY, Jan, 415 01 Teplice (CZ); VRATNY, Miroslav, 415 01 Teplice (CZ)
(74) Representative: Musil, Dobroslav
(86) International application number: PCT/CZ2021/050027
(87) International publication number: WO 2021/175349

(56) References cited:
- WO-A1-2013/034812
- WO-A2-2005/022127
- CN-A- 106 840 003
- CN-U- 202 383 388
- JP-A- 2008 139 268
- US-A1- 2007 028 681

## Description

### Technical field

The invention relates to a method of contactless determination of geometric accuracy of the shape of spatially curved automotive glass in a car position.

In addition, the invention relates to a device for contactless determination of geometric accuracy of the shape of spatially curved automotive glass in the car position, which comprises a frame on which is rotatably mounted a measuring table with a measurement surface for placing the measured automotive glass, the measuring table being coupled to a drive which is also mounted on the frame and which is used for tilting the measuring table with the measurement surface and the measured automotive glass about a horizontal axis.

### Background art

At present, determination of the geometric accuracy of the shape of shaped glass, especially automotive glass, is performed in a contact manner on scale models, for example according to CN101749992, CN201926435, CN201964850, CN202216627 or CN208075720. A model equipped with several tens of contact sensors on the front side represents a partial 3D model of glass. The measured glass is placed on the model at RPS points and the position in the plane of the glass is determined by backstops. The glass is placed in the scale model on the RPS points between the backstops in an approximately horizontal position. The glass together with the scale model is then tilted by turning against the horizontal axis to a measurement position, the inclination of which to the horizontal plane corresponds to the position of the glass mounted on the car body (the so-called "car position"). The exact position of the glass is given by the glass resting on the backstops, to which it is pressed by gravity. At a single moment, all contact sensors are pushed into contact with the measured glass by a slight force, their position is recorded and compared with the coordinates corresponding to the 3D model. Coordinate differences must not exceed a predetermined value at the measured points.

The disadvantage of measuring in a contact manner is the danger of glass deformation after its contact with the sensor and the resulting inaccuracy of the measurement. This is especially dangerous for very thin automotive glass currently produced. Another disadvantage is the need to have a unique scale model for each shape of glass.

CN109084682 tries to solve this problem by contactless determination of geometric accuracy of the shape of products of glass, especially automotive glass, by means of two measuring sets with laser probes. The first measuring set comprises a point laser probe which can obtain coordinates of a certain point on the outer surface of automotive glass by scanning. The second measuring set comprises a line laser probe which can obtain coordinates of points of the black edge of automotive glass. When coordinates are obtained, they are compared with a standard sample.

The disadvantage of using laser sensors (point and line laser sensors) for shape rugged surfaces is the inaccuracy of triangulation position measurement with a variable dependence of the measured value on the deviation of the transmitted beam from the measured surface normal. This disadvantage is even more pronounced for the case of sensing a glossy surface with a high degree of parasitic reflections. Another drawback is a reduced robustness of the sensor, associated with a high sensitivity to fluctuations in the exposure parameters of the sensed scene.

WO2013034812A1 describes a device for measuring the flatness of a reflecting surface, such as the surface of glass, by measuring a distance from the reflecting surface, which comprises two light sources that emit light beams in such a manner that these beams are incident on the reflecting area common to both beams. The device is capable of measuring the flatness of a flat glass in the horizontal and vertical positions of the reflecting surface.

JP2008139268 discloses a device for measuring fine shape deviations in glass substrates, especially for flat displays. The device comprises a table for placing the element to be measured and a plurality of air scanners. The table is coupled to a drive which ensures its movement under the system of air scanners, wherein longitudinal movement of the table is part of the background art.

WO2005022127A2 describes a support for a plurality of conformably arranged spaced-apart distance-measuring sensors for measuring the distance to a curved glass sheet in the automotive industry (e.g. a windshield). The device comprises a reference base plate and a plurality of spaced apart sensors disposed thereon, the sensors being more densely arranged at points of curvature of the element to be measured. The device uses optical sensors comprising an emitter and optical elements to send light to the element to be measured and other optical elements to direct the reflected light to a light receiver, such as a CCD line element.

The object of the invention is therefore to eliminate the above-mentioned disadvantages and provide a contactless method of determination of geometric accuracy of the shape of transparent spatially curved automotive glass, and a device for implementing it.

### Principle of the invention

The object of the invention is achieved by a method of contactless determination of geometric accuracy of the shape of spatially curved automotive glass in a car position, whose principle consists in the features of claim 1.

The advantage of this method is, in addition to eliminating the drawbacks of the background art, with accurate measurement of geometric accuracy of the shape of spatially curved thin automotive glass, easy handling of the measured glass and omission of models of different shapes and sizes of glass, which reduces measurement costs.

Another advantage is high flexibility and variability of the method of measurement when changing the controlled range of measured products, as well as high speed of measurement, while ensuring a much larger number of measured points compared with the current method of measurement. The measured product is not loaded by contact deformations from contact sensors and its position in space can be easily modified.

The relative movement of the measuring head and the measuring table is caused by the movement of the measuring head, or by the movement of the measuring table, or by the movement of both against each other.

In a preferred embodiment, bodies of the measuring probes in the rest position of the measuring head can move in the measuring head with respect to the measurement surface of the measuring table according to the assumed shape of the measured product either individually or in groups so as to achieve maximum measurement accuracy. This embodiment is suitable for more shaped products for which it is possible to achieve the optimal distance from the measured product by adjusting the measuring probes such that the values of the measuring distance are within the range of the highest measurement accuracy of the respective measuring probe.

In the basic embodiment, the product to be measured is placed on the measuring table which is in a horizontal position. The actual measurement then takes place in the measurement position, the so-called car position, i.e., in the position in which the automotive glass is placed in the car. In this manner, the deformations of the automotive glass depending on the direction of gravity are allowed for, thus avoiding problems in mounting the glass in the car, therefore the measurement position of the glass is defined by the car manufacturer.

For placement of the shaped glass to be measured, supports are distributed on the measurement surface of the measuring table at RPS points for point contact with the measured product and backstops are distributed to define the position of the measured shaped glass of the product on the measuring table. Precise localization of the measured product by means of backstops eliminates measurement errors.

In a preferred embodiment, the supports and the backstops are placed on magnetic clamps, which are distributed on the measurement surface of the measuring table in the direction of the **x, y** coordinates manually to a predetermined position of the measurement points. The positions are set by means of a laser beam perpendicular to the plane of the measurement surface of the measuring table, the heights of the supports being adjusted individually according to the shape of the measured automotive glass to the coordinate value z of the respective measurement point. The magnetic clamps make it possible to ensure high flexibility of the device.

An alternative to the manual placement of the magnetic clamps on the measurement surface of the measuring table is the mechanical placement by means of a distributor. In this embodiment, the magnetic clamps are distributed in the direction of the **x, y** coordinates by means of the distributor arranged above the measurement surface of the measuring table to the predetermined position of the measurement points. If the measured product is automotive glass, the measurement points are determined by the glass manufacturer and are referred to as RPS points.

The advantage of the application of the mechanical distributor is quick and comfortable adjustment of the measuring table to a new product range.

In another alternative embodiment of the method, the supports and the backstops at the measurement points are fixedly mounted on a planar plate, the so-called pseudo-scale model which is placed on the measuring table on fixing mandrels defining its position.

The application of the pseudo-scale model is especially advantageous for determining geometric accuracy of the shape of spatially curved automotive glass, since the pseudo-scale model ensures high accuracy in the placement of RPS points and backstops, whereby it is possible to perform external calibration measurements of the distribution of RPS points. In addition, it is possible to perform fast re-deployment the pseudo-scale model if the same range of products is produced after a certain time interval, because the pseudo-scale model can be stored and replaced as a whole.

For accurate measurement, the contactless measuring probes are formed by confocal probes, which emit rays of polychromatic white light towards the surface of the measured product and follow the ray reflected from the surface of the measured product and evaluate the wavelength of the received ray from which they determine the distance from the surface of the measured product.

In all the above-mentioned embodiments of the method according to the present invention, the contactless measuring probes may be formed by ultrasound probes.

The ultrasound probes represent a cheaper alternative. However, they have worse measurement accuracy in the order of one tenth of a mm compared with confocal probes with accuracy in thousandths of mm.

The principle of the device for performing the aforementioned method consists in the features of claim 9.

The contactless measuring probes are arranged in the measuring head in at least one row perpendicular to the direction of the relative movement of the measuring head and the measuring table.

It is advantageous for automotive glass of more complex shapes if the contactless measuring probes are mounted in the measuring head in its rest position displaceably in the direction towards and away from the measurement surface of the measuring table. By adjusting the measuring probes, their optimal distance from the measured product in the respective area can be achieved.

At the same time, the measuring head can be mounted displaceably in the measurement plane in a direction perpendicular to the direction of the relative movement of the measuring head and the measuring table, which is advantageous for measuring large products, for which a measuring head having dimensions smaller than those of the measured product can be used.

In another preferred embodiment, the measuring head can be provided with arms which are tilting at their ends in which measuring contactless measuring probes are mounted. This arrangement is intended for products which are extremely shaped at the edges.

The contactless measuring probes are formed by confocal probes or by ultrasound probes.

To precisely define the position of the measured products on the measurement surface, the supports for point contact with the measured automotive glass and the backstops for defining the position of the measured automotive glass on the measurement surface of the measuring table are mounted on the measurement surface.

In one possible embodiment, the supports and the backstops are mounted on magnetic clamps which are displaceable with respect to the measurement surface and adjustable in a predetermined position on the measurement surface of the measuring table.

In another embodiment, the supports and the backstops are fixedly mounted at the measurement points on the pseudo-scale model plate. The pseudo-scale model can be fastened on the measurement surface of the measuring table by means of the fixing mandrels which define its position.

The measured values of the distances are compared with the desired values at the respective points of the CAD model of the shaped glass very quickly, almost in online mode.

### Description of drawings

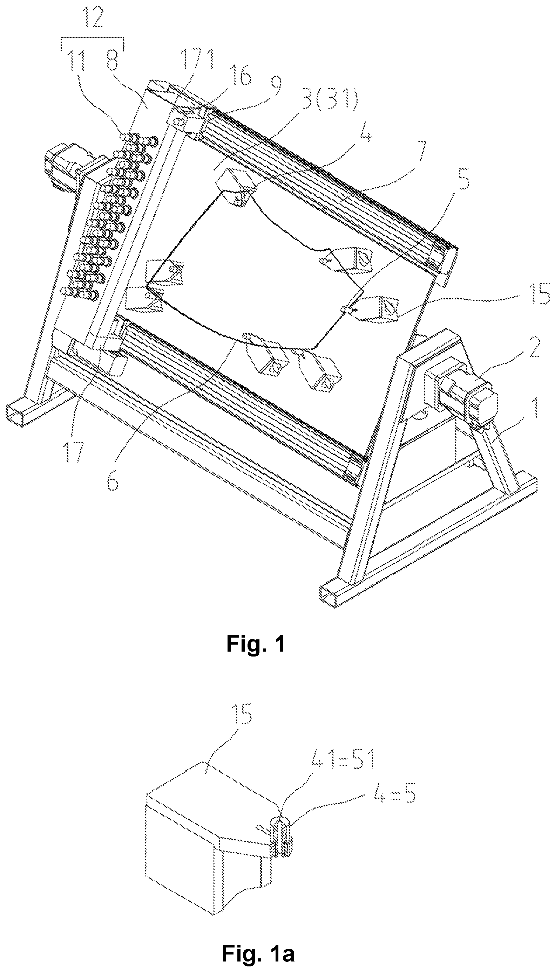

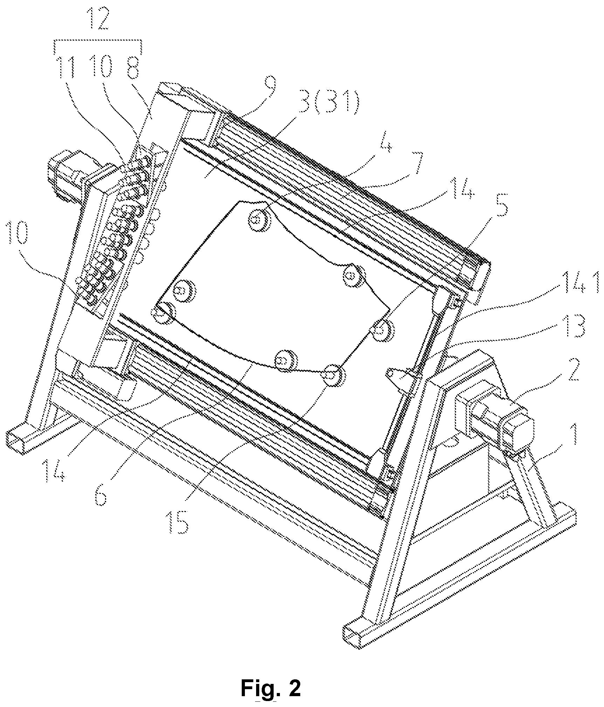

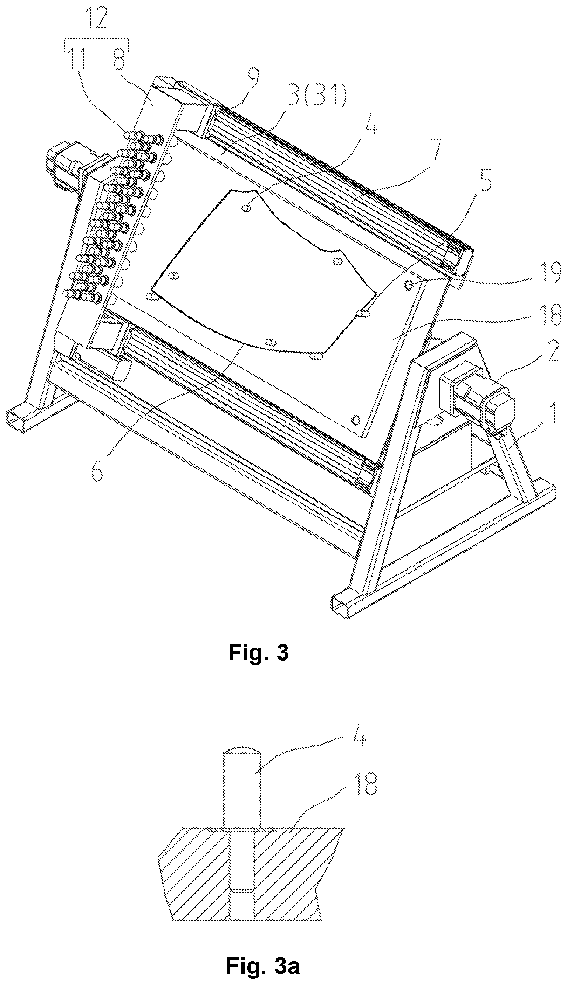

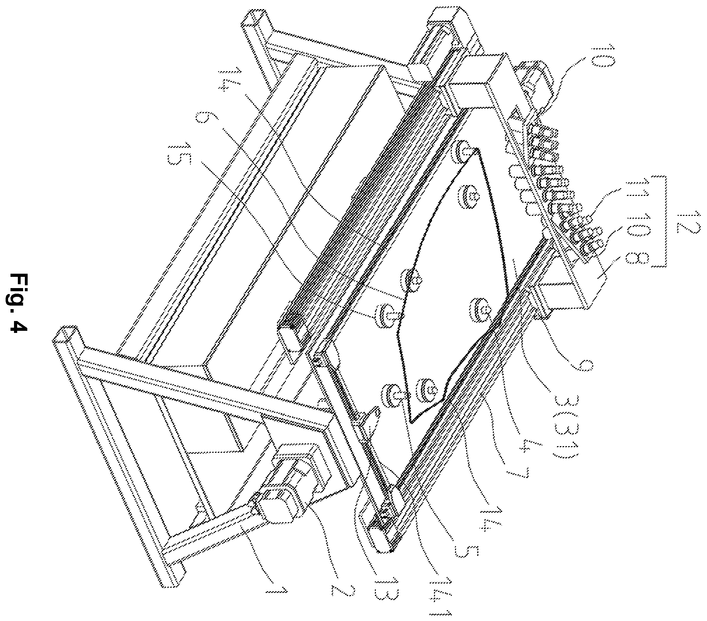

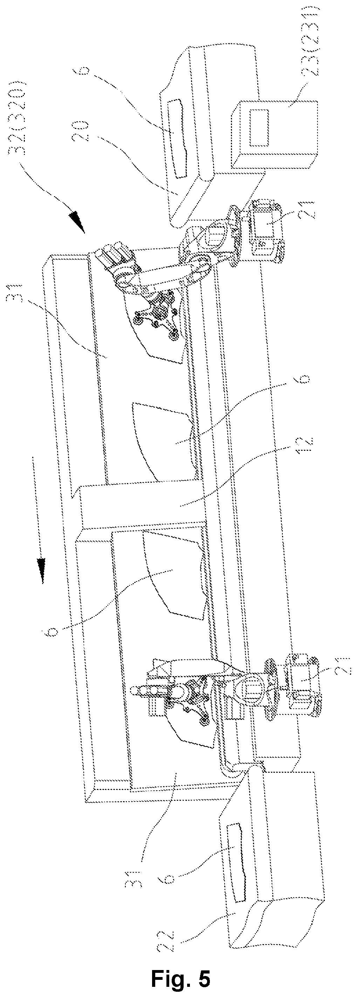

The method of contactless determination of the shape of automotive glass, will be described with reference to several examples of embodiment of the invention, which are schematically represented in the enclosed drawings, wherein Fig. 1 shows a view of a basic embodiment of a device with a measuring table in a car position, Fig. 1a shows a view of a magnetic clamp with a support, Fig. 2 represents a view of another variant of the embodiment with a divided measuring head with tilting edge portions, Fig. 3 shows an embodiment of the device with a pseudo-scale model, Fig. 3a shows the mounting of the supports in the pseudo-scale model, Fig. 4 shows the device according to Fig. 1 with the measuring table in a horizontal position and Fig. 5 shows the device as part of the production line of the measured products.

### Examples of embodiment

The method of contactless determination of geometric accuracy of the shape of spatially curved automotive glass in the car position will be explained with reference to a device for performing the method. The device will be described in exemplary embodiments which are given by way of example and the invention is not limited to these embodiments. The largest share of transparent shaped flat products made of glass or plastics is represented by automotive glass. This glass requires high dimensional and shape accuracy, allowing it to be installed in the relevant part of the car body with high precision.

A measuring table **3** is rotatably mounted on a frame **1** of the device. The measuring table **3** is in a known unillustrated manner coupled to a drive **2,** which is also arranged on the frame **1**. The drive **2** serves to tilt the measuring table **3** about the horizontal axis between its horizontal position and measurement position which during the measurement of the geometric accuracy of the shape of automotive glass corresponds to the position of the glass mounted on the car body - the so-called car position. In this measurement position (car position) the measuring table **3**, or its measurement surface **31,** usually has an almost vertical position. Parallel to the horizontal axis of rotation of the measuring table **3**, linear guides **7** are arranged at its edges. On the linear guides **7** are mounted carriages **9** which are connected by a crossbar **8**. In the crossbar **8** are formed a plurality of parallel holes in defined positions which accommodate contactless measuring probes **11**. The crossbar **8** constitutes together with the contactless measuring probes **11** a measuring head **12**. Ultrasound probes or confocal probes can be used as the contactless measuring probes **11**. Due to the dimensions of the contactless measuring probes **11**, especially confocal probes, the contactless measuring probes **11** are arranged in several rows perpendicular to the direction of the movement of the measuring head **12,** whereby the contactless measuring probes **11** in the individual rows are offset from one another. Both types of the contactless measuring probes **11**, i.e., both the ultrasound probes and the confocal probes, comprise an emitter of respective radiation and a sensor of respective radiation. The distance between the contactless probes **11** and the measurement surface **31** of the measuring table **3** is constant during their relative movement.

The measured automotive glass **6** to be measured can be placed on the measuring table **3** in several ways.

In the embodiment of Fig. 1, on the measurement surface **31** of the measuring table **3** are arranged magnetic clamps **15** on which either supports **4** or the backstops **5** are mounted. The supports **4** support the measured automotive glass from below and, when measuring automotive glass, they are placed at RPS points which are determined by the glass or car manufacturer as the points where the glass is to be supported during the measurement. The backstops **5** are arranged around the circumference of the glass. The locations for the backstops **5** are also predetermined by the manufacturer so that the position of the automotive glass **6** is unambiguous and precisely defined. The arrangement of the magnetic clamps **15** on the measurement surface **31** of the measuring table **3** is performed manually and automatically in the horizontal position of the measuring table **3.** For manual distribution, the supports **4** and the backstops **5** are provided with aiming holes **41**, **51** which enable to **set** them precisely to the predetermined position. The magnetic clamp **15** is shown together with the support **4** or the backstop **5** in Fig. 1a, the aiming hole **41, 51** being shown in a sectional view. On the measuring head **12** is mounted a transverse guide **17** on which a setting head **171** is mounted displaceably in a direction perpendicular to the linear guide **7**. A laser emitter **16** is arranged in the setting head **171.**

Before placing the measured automotive glass **6** on the measurement surface **31** of the measuring table **3**, the measuring head **12** starts to move forward without starting the contactless measuring probes **11** and the setting head **171** with the laser emitter **16** is moved to a position above the measurement surface **31** of the measuring table **3** in which the backstop **5** or the support **4** is to be arranged on the respective magnetic clamp **15**. The magnetic clamp **15** on the measurement surface **31** is manually **set** to a position in which the beam of the laser emitter **16** passes through the aiming hole **51** of the respective stop **5** or the aiming hole **41** of the respective support **4**. In this position, the magnetic clamp **15** is secured in a known manner and the measuring head **12** with the setting head **171** and the laser emitter **16** moves to the location of another backstop **5** or the supports **4** and their magnetic clamps **15** are manually set to a required position. After setting all the supports **4** and the backstops **5** and their magnetic clamps **15,** the measuring head **12** moves to the initial position. The supports **4** are pre-set to the desired height. After the supports **4** and the backstops **5** have been set up, the automotive glass **6** is placed between the backstops **5** on the supports **4**.

For the automatic distribution of the magnetic clamps **15,** the setting head **171** is provided with and coupled to a known drive (not shown) for setting its position in the **y**-axis on the measuring head **12,** whereby the measuring head **12** serves to adjust the position of the setting head **171** in the **x**-axis. The measuring head **12** cooperates with the control unit of the device which stores information about the required positions of the magnetic clamps **15** for the backstops **5** or the supports **4**, or this information is stored in another suitable means which is coupled to the control unit, or it may be stored in the measuring head **12**. In addition, the setting head **171** is provided with means (not shown) for gripping the magnetic clamp **15** and releasing it at a designated location of the measurement surface **31** of the measuring table **3** and with a means for triggering its magnetic properties.

According to one of the variants of measurement, the measuring table **3** with the measuring head **12** subsequently turns by means of the drives **2** to a position, in which, the measured automotive glass is in the car position, the contactless measuring probes **11** will be activated and the measuring head **12** is set in motion. Once the contactless measuring probes **11** of the measuring head **12** get to the position against the measured glass, they start to obtain information about the distance z of the face of the respective contactless measuring probes **11** from the upper surface of the measured glass in the respective **x** and **y** coordinates. This information is either stored in the memory arranged in the measuring head **12,** or in another suitable means which is connected to the measuring head **12,** and subsequently it is compared with the information about the required shape of the respective type of the measured automotive glass.

The contactless measuring probes **11** are connected|/coupled to the control unit which is provided with means for evaluating the distance **z** of the contactless measuring probes **11** from the upper surface of the measured automotive glass**6** in the respective coordinates (**x**, **y**), with operational memory and archive memory. The operational memory is used to store (temporarily) measured distances and, optionally, the calculated shape of the measured automotive glass**6** and information about the correct shape of the automotive glass to be measured is stored in the archive memory.

In the exemplary embodiment of Fig. 2, the automotive glass **6** to be measured is placed on the measurement surface **31** of the measuring table **3** as in the embodiment of Fig. 1. The manual setting of the magnetic clamps **15** by means of the setting head **171** and the laser emitter **16** is replaced by a mechanical distributor **13** which is displaceably mounted on an auxiliary crossbar **141** whose ends are displaceably mounted on an auxiliary linear guide **14** which is mounted in the vicinity of the edges of the measuring table **3** parallel with the linear guide **7**. For the manual distribution of the magnetic clamps **15** with the supports **4** or with the backstops **5,** the auxiliary linear guide **14** as well as the auxiliary crossbar **141** are provided with scales for setting the distributor **13** in the **x, y** coordinates. For the automatic distribution of the magnetic clamps **15,** the distributor **13** is coupled to a well-known drive (not shown) for setting its position in the **y** axis and the auxiliary crossbar **141** is coupled to well-known drives (not shown) for setting the position of the auxiliary crossbar **141,** or the position of the distributor **13** in the x axis. The two drives are coupled to the control device (not shown) in which information about the required positions of the clamps **15** for the backstops or the supports is stored. In both cases, the magnetic clamp **15** is inserted by the support **4** or by the backstop **5** into the gripping part of the distributor **13** by which it is moved to a predetermined position in which it is secured on the measurement surface **31** of the measuring table **3** and released from the distributor **13** into which the support **4** or the backstop **5** of other magnetic clamps **15** is/are inserted.

In the embodiment of Fig. 2, is shown an alternative embodiment of a measuring head **12** which is divided. The central part of the contactless measuring probes **11** is mounted directly on the crossbar **8** in the same manner as in the embodiment of Fig. 1. The edge portions of the contactless measuring probes **11** are mounted on the tilting arms **10**, which are rotatably mounted on the crossbar **8**. Due to the fact that the measured automotive glass **6**, in particular automotive glass, are in some cases markedly shaped, especially in the peripheral parts, the tilting arms **10** with the contactless measuring probes **11** can be rotated to a position in which the axes of the contactless measuring probes **11** are as perpendicular as possible to the surface of the respective part of the measured automotive glass**6**, i.e., the axis of the contactless measuring probes **11** have the smallest possible deviation from the normal of the surface of the measured automotive glass**6**, which increases the accuracy of measurement of the shape of the peripheral parts of the measured automotive glass**6**,

In the embodiment of Fig. 3, on the measuring table **3** is placed a pseudo-scale model **18** formed by a plate on which supports **4** are placed at measurement points, for example, at RPS points , i.e., at RPS points of the measured automotive glass **6**, and backstops **5** around the circumference of automotive glass **6.** The pseudo-scale model **18** is placed on the measuring table **3** by means of the fixing mandrels **19** which precisely define its position. For each type and dimensions of the measured automotive glass **6,** a special pseudo-scale model **18** needs to be formed. In all the above-mentioned embodiments, the measured automotive glass **6** is placed with the same accuracy. Fig. 3a shows a detail of the fixed mounting of the support **4** in the plate of the pseudo-scale model **18**. The backstops **5** are arranged in the plate of the pseudo-scale model **18** in the same manner.

As to the movement of the measuring head **12** above the measured automotive glass **6,** this movement can be replaced by the movement of the measuring table **3**, whereby the measuring head **12** is stationary, or both the measuring table **3** and the measuring head **12** can move.

In the embodiment shown in Fig. 5., which is outside the scope of the protection of the invention, the measuring table **3** consists of a measuring conveyor **32** with a movable measurement surface **31**, on which the automotive glass panes**6** to be measured are placed during the measurement. The measuring head **12** is in this embodiment stationary and is fixedly mounted on the frame **320** of the measuring conveyor **32** and extends across the entire width of the measuring conveyor **32**. In this embodiment, the measuring conveyor is part of the production line of the measured automotive glass **6.** The measured automotive glass **6** is conveyed by the unillustrated production line (not shown) to the input periphery **20** of the measuring device which terminates the production line upstream of the measuring conveyor **32** and from which the measured product **6** is transferred by means of a manipulator **21** onto the measurement surface **31** of the measuring conveyor **32** and set to the measurement position. The measurement surface **31** of the measuring conveyor **32** carries the measured product **6** under the measuring head **12**. During the passage of the measured product **6** under the measuring head **12,** geometric accuracy of the shape of automotive glass is measured by using any of the above-described methods. The contactless measuring probes **11** are connected/coupled to the control unit **23**, which is provided with evaluating means **23** of the distance z of the contactless measuring probes **11** from the upper surface of the measured automotive glass **6** in the respective **x, y** coordinates. At the end of the measuring conveyor **32,** the product is gripped by the manipulator **21** and transferred to the output periphery **22** of the measuring device which is connected to the measuring conveyor **32,** and further automotive glass **6** continues to the parts of the production line further downstream.

The above-mentioned described devices are used to carry out the method of measurement of geometric accuracy of the shape of spatially curved automotive glass.

The automotive glass **6** to be measured is placed in a predetermined measurement position on the measurement surface **31** of the measuring table **3** above which is displaceably arranged the measuring head **12** fitted with a plurality of contactless measuring probes **11** which are arranged against the measurement surface **31** and the measurement is started. The measuring head **12** and the measurement surface **31** of the measuring table move relative to each other during the measurement, whereby the measured automotive glass **6** passes under the measuring head **12,** or between the measuring head **12** and the measurement surface **31** on which it is placed. During the relative movement of the measuring head **12** and the measurement surface **31,** the distance of the contactless measuring probes **11** from the surface of the measured automotive glass **6** is evaluated, whereupon these values are compared with the desired distance values in positions corresponding to the measurement positions, usually with the distance values at the corresponding points of the CAD model of the measured automotive glass **6.**

### Industrial applicability

The invention is intended for determining the shape of spatially curved automotive glass.

### List of references

- 1: device frame
- 2: drive
- 3: measuring table
- 31: measurement surface
- 32: measuring conveyor
- 320: measuring conveyor frame
- 4: support
- 41: aiming hole of the support
- 5: backstop
- 51: aiming hole of the backstop
- 6: automotive glass
- 7: linear guide
- 8: crossbar
- 9: carriage
- 10: tilting arm
- 11: contactless measuring probe
- 12: the measuring head
- 13: distributor
- 14: auxiliary linear guide
- 141: auxiliary crossbar
- 15: magnetic clamp
- 16: laser emitter
- 17: transverse guide of the adjusting head of the laser emitter
- 171: adjusting head of the laser emitter
- 18: pseudo-scale model
- 19: fixing mandrel of the pseudo-scale model
- 20: input peripheral devices of the measuring device
- 21: manipulator
- 22: output peripheral devices of the measuring device

## Claims

1. A method of contactless determination of geometric accuracy of the shape of spatially curved automotive glass (6) in a car position, comprising the following steps
- on the measurement surface (31) of the measuring table (3) in a horizontal position, at least three supports (4) for point contact with the measured automotive glass (6) are fixed/placed at measurement points, referred to as RPS points, determined by the glass or car manufacturer and at least three backstops (5) for defining the position of the measured automotive glass (6) are fixed/placed along the anticipated circumference of the measured automotive glass (6) at the points determined by the manufacturer,
- the automotive glass (6) is placed on the supports (4) at RPS points and between the backstops (5) arranged on the measurement surface (31) of the measuring table (3),
- the measuring table (3), together with a measuring head (12), rotates about the horizontal axis of rotation and stops as soon as the automotive glass (6) reaches the car position,
- in a direction parallel to the axis of rotation of the measuring table (3), the measuring head (12) fitted with a number of non-contact measuring probes (11) directed towards the measurement surface (31) is moved over the surface of the automotive glass (6), while during the mutual movement of the measuring heads (11 ) and the measured automotive glass (6), the distance of the non-contact measuring probes (11) from the surface of the measured automotive glass (6) is evaluated in predetermined positions, which is compared with the required distance values in the positions corresponding to the measurement positions, wherein the distance between the contactless measuring probes (11) and the measurement surface (31) of the measuring table (3) is constant.

2. The method according to claim 1, **characterized in that** in the car position the measured automotive glass (6) rests on all backstops (5) and all supports (4) arranged on the measurement surface (31).

3. The method according to claim 1 or 2, **characterized in that** the measured values of the distances of the measuring probes (11) from the surface of the measured automotive glass (6) are compared with the values of the distances at the corresponding points of the CAD model of the respective automotive glass (6).

4. The method according to any of the preceding claims, **characterized in that** the supports (4) and the backstops (5) are located on magnetic clamps (15), which are placed manually on the measurement surface (31) of the measuring table (3) in the direction of the **x, y** coordinates to a predetermined position of the measurement points, whereby the position is set by means of a laser beam perpendicular to the plane of the measurement surface (31) of the measuring table (3), whereby the heights of the supports (4) are adjusted individually according to the shape of the measured automotive glass (6) to the size of the **z** coordinate of the respective measurement point.

5. The method according to any of claims 1 to 3, **characterized in that** the supports (4) and the backstops (5) are located on magnetic clamps (15), which are distributed on the measurement surface (31) of the measuring table (3) in the direction of the **x, y** coordinates by means of a distributor (13) to a predetermined position of the measurement points, whereby the heights of the supports (4) are adjusted individually according to the shape of the measured automotive glass (6) to the size of the **z** coordinate of the respective measurement point either before placing or after placing the supports (4) in the respective **x, y** coordinates.

6. The method according to any of claims 1 to 3, **characterized in that** the supports (4) and backstops (5) are fixedly mounted at the measurement points on a plate of a pseudo-scale model (18) which is placed on the measuring table (3) on fixing mandrels (19) which define its position.

7. The method according to any of the preceding claims, **characterized in that** the contactless measuring probes (11) are formed by confocal probes which emit beams of white light towards the surface of the measured product (6) and follow the beam reflected from the surface of the measured product (6) and evaluate the wavelength of the received beam from which they determine the distance from the surface of the measured product (6).

8. The method according to any of claims 1 to 7, **characterized in that** the contactless measuring probes (11) are formed by ultrasound probes.

9. A device for contactless determination of geometric accuracy of the shape of spatially curved automotive glass (6) in a car position, comprising a measuring table (3) and a frame (1) on which is rotatably mounted said measuring table (3) with a measurement surface (31) for placing the measured automotive glass (6), whereby the measuring table (3) is coupled to a drive (2) which belongs to said device and is also mounted on the frame (1) and is configured to be used to tilt the measuring table (3) with the measurement surface (31) and the measured automotive glass about a horizontal axis, whereby the measurement surface (31) is capable of occupying the horizontal position and the car position for the respective measured automotive glass (6), whereby the device further comprises linear guides (7), carriages (9) and a crossbar (8) configured such that on the edges of the measuring table (3), parallel to the horizontal axis of rotation of the measuring table (3), said linear guides (7) are placed on which said carriages (9) are mounted displaceably, which protrude above the measuring surface (31) and which are connected by said crossbar (8) in which a number of holes are created in defined positions and in which contactless measuring probes (11) are mounted, which together with the crossbar (8) form the measuring head (12), wherein the measured automotive glass (6) is positionable on at least three supports (4) arranged on the measurement surface (31) in the RPS points and its position around the circumference is defined by at least three backstops (5) arranged on the measurement surface (31) at points determined by the automotive glass or car manufacturer and in the car position, whereby the supports and backstops are part of the device and are configured such that the measured automotive glass (6) rests on all backstops (5) and on all supports (4) arranged on the measurement surface (31), whereby the contactless measuring probes (11) are connectedl/coupled to a control unit which is part of the device and is provided with evaluating means of the distance (z) of the contactless measuring probes (11) from the upper surface of the measured spatially curved automotive glass (6) in the respective coordinates (x, y) and means for comparing this distance with desired distance values at positions corresponding to the measurement positions.

10. The device according to claim 9, whereby the contactless measuring probes (11) are arranged in the measuring head (12) in at least one row perpendicular to the direction of the relative movement of the measuring head (12) and the measuring table (3),

11. The device according to any of claims 9 to 10, **characterized in that** the measuring head (12) is mounted displaceably in the measuring plane in the direction perpendicular to the direction of the relative movement of the measuring head (12) and the measuring table (3).

12. The device according to any of claims 9 to 11, **characterized in that** the measuring head (12) is provided at the ends with tilting arms (10) in which also contactless measuring probes (11) are accommodated.

13. The device according to any of claims 9 to 12, **characterized in that** the contactless measuring probes (11) are formed by confocal probes or ultrasound probes.

14. The device according to any of claims 9 to 13, **characterized in that** the supports (4) and the backstops (5) are mounted on magnetic clamps (15) displaceably with respect to the measurement surface (31) and are adjustable in the determined position on the measurement surface (31) of the measuring table (3).

15. The device according to any of claims 9 to 13, **characterized in that** the supports (4) and the backstops (5) are fixedly mounted at the measurement points on the plate of the pseudo-scale model (18) which can be fastened on the measurement surface (31) of the measuring table (3) by means of the fixing mandrels (19) which define its position.

## Patentansprüche

1. Verfahren zur berührungslosen Ermittlung der geometrischen Genauigkeit der Form einer räumlich gekrümmten Autoscheibe (6) in car position, das folgende Schritte umfasst:
- auf eine Messfläche (31) eines Messtisches (3) in horizontaler Position werden an Messpunkten, die als RPS-Punkte bezeichnet sind, die vom Scheiben- oder Fahrzeughersteller festgelegt werden, mindestens drei Stützen (4) befestigt/platziert, um einen punktuellen Kontakt mit der zu messenden Autoscheibe (6) herzustellen und entlang des vorausgesetzten Umfangs der zu messenden Autoscheibe (6) werden an vom Hersteller festgelegten Stellen mindestens drei Anschläge (5) angebracht, um die Position der zu messenden Autoscheibe (6) zu definieren.
- die Autoscheibe (6) wird in den RPS-Punkten auf die Stützen (4) und zwischen die Anschläge (5) angebracht, die auf der Messfläche (31) des Messtisches (3) angeordnet sind.
- der Messtisch (3) wird zusammen mit dem Messkopf (12) um die horizontale Drehachse gedreht und gestoppt, sobald die Autoscheibe (6) car position erreicht.
- in der Richtung parallel zur Drehachse des Messtisches (3) wird über der Fläche der Autoscheibe (6) der Messkopf (12) bewegt, der mit einer Vielzahl der berührungslosen Messsonden (11) ausgestattet ist, die auf die Messfläche (31) gerichtet sind, wobei während der gegenseitigen Bewegung des Messkopfes (11) und der zu messenden Autoscheibe (6) der Abstand der berührungslosen Messsonden (11) von der Oberfläche der zu messenden Autoscheibe (6) an vorbestimmten Positionen ausgewertet wird, der mit den Sollwerten des Abstandes an den Positionen verglichen wird, die den Messpositionen entsprechen, wobei der Abstand zwischen den berührungslosen Messsonden (11) und der Messfläche (31) des Messtisches (3) konstant ist.

2. Verfahren nach dem Anspruch 1, **dadurch gekennzeichnet, dass** in car position die zu messende Autoscheibe (6) auf allen Anschlägen (5) und allen auf der Messfläche (31) angeordneten Stützen (4) aufliegt.

3. Verfahren nach dem Anspruch 1 oder 2, **dadurch gekennzeichnet, dass** die Messwerte der Abstände der Messsonden (11) von der Oberfläche der zu messenden Autoscheibe (6) mit den Werten der Abstände an den entsprechenden Punkten eines CAD-Modells der jeweiligen Autoscheibe (6) verglichen werden.

4. Verfahren nach einem der vorangehenden Ansprüche, **dadurch gekennzeichnet, dass** die Stützen (4) und die Anschläge (5) auf magnetischen Klemmen (15) angebracht sind, die entlang der Messfläche (31) des Messtisches (3) in Richtung der **x-, y**-Koordinaten manuell in eine vorbestimmten Position der Messpunkte bewegt werden, wobei die Position mittels eines Laserstrahls eingestellt wird, der senkrecht zur Ebene der Messfläche (31) des Messtisches (3) verläuft, wobei die Höhen der Stützen (4) individuell entsprechend der Form der zu messenden Autoscheibe (6) auf den Wert der Koordinate **(z)** des jeweiligen Messpunktes eingestellt werden.

5. Verfahren nach einem der Ansprüche 1 bis 3, **dadurch gekennzeichnet, dass** die Stützen (4) und die Anschläge (5) auf magnetischen Klemmen (15) angebracht sind, die entlang der Messfläche (31) des Messtisches (3) in Richtung der **x-, y**-Koordinaten mittels eines Distributionsgliedes (13) in eine vorbestimmte Position der Messpunkte positioniert werden, wobei die Höhen der Stützen (4) individuell entsprechend der Form der zu messenden Autoscheibe (6) auf die Größe der Koordinate **(z)** des jeweiligen Messpunktes entweder vor dem Positionieren oder nach dem Anbringen der Stütze (4) in die jeweiligen **x-, y**-Koordinaten eingestellt werden.

6. Verfahren nach einem der Ansprüche 1 bis 3, **dadurch gekennzeichnet, dass** die Stützen (4) und die Anschläge (5) an den Messpunkten auf einer Platte eines Pseudo-Modells (18) fest gelagert sind, das auf den Messtisch (3) auf die seine Position definierenden Befestigungsdorne (19) gelagert wird.

7. Verfahren nach einem der vorangehenden Ansprüche, **dadurch gekennzeichnet, dass** die berührungslosen Messsonden (11) durch konfokale Sonden gebildet werden, die Strahlen des weißen Lichtes auf die Oberfläche des zu messenden Produktes (6) senden und den von der Oberfläche des zu messenden Produktes (6) reflektierten Strahl verfolgen und die Wellenlänge des empfangenen Strahls auswerten, aus der sie den Abstand von der Oberfläche des zu messenden Produktes (6) bestimmen.

8. Verfahren nach einem der Ansprüche 1 bis 7, **dadurch gekennzeichnet, dass** die berührungslosen Messsonden (11) durch Ultraschallsonden gebildet werden.

9. Vorrichtung zur berührungslosen Ermittlung der geometrischen Genauigkeit der Form einer räumlich gekrümmten Autoscheibe (6) in car position, die einen Messtisch (3) und einen Rahmen (1) aufweist, auf dem der erwähnte Messtisch (3) mit einer Messfläche (31) zur Aufnahme der zu messenden Autoscheibe (6) drehbar gelagert ist, wobei der Messtisch (3) mit einem zur erwähnten Vorrichtung gehörenden Antrieb (2) verkoppelt ist, der ebenfalls auf dem Rahmen (1) gelagert ist und derart konfiguriert ist, dass er dem Neigen des Messtisches (3) mit der Messfläche (31) und der zu messenden Autoscheibe um die horizontale Achse herum dient, wobei die Messfläche (31) im Stande ist, sowohl horizontale Position als auch car position für die jeweilige zu messende Autoscheibe (6) einzunehmen, wobei die Vorrichtung ferner Linearführungen (7), Wagen (9) und Querstange (8) aufweist, die derart konfiguriert sind, dass an den Kanten des Messtisches (3) parallel zur horizontalen Drehachse des Messtisches (3) die erwähnten Linearführungen (7) angeordnet sind, auf denen die erwähnten Wagen (9) verstellbar gelagert sind, die über die Messfläche (31) hinausragen und die durch die erwähnte Querstange (8) verbunden sind, in der an definierten Positionen eine Vielzahl der Öffnungen ausgebildet ist, in denen berührungslose Messsonden (11) gelagert sind, die zusammen mit ihr einen Messkopf (12) bilden, wobei die zu messende Autoscheibe (6) mindestens auf drei auf der Messfläche (31) in RPS-Punkten angeordneten Stützen (4) positionierbar ist und ihre Position entlang des Umfangs durch mindestens drei Anschläge (5) definiert wird, die auf der Messfläche (31) an den Stellen, die vom Autoscheiben- oder Fahrzeughersteller festgelegt sind, und in car position angeordnet sind, wobei die Stützen und die Anschläge Bestandteil der Vorrichtung sind und derart konfiguriert sind, dass die zu messende Autoscheibe (6) auf allen Anschlägen (5) und allen auf der Messfläche (31) angeordneten Stützen (4) aufliegt, wobei die berührungslosen Messsonden (11) mit einer Steuereinheit verbunden sind, die Bestandteil der Vorrichtung ist und Auswertemittel des Abstands (z) der berührungslosen Messsonde (11) von der oberen Fläche der zu messenden, räumlich gekrümmten Autoscheibe (6) in den jeweiligen Koordinaten **(x, y)** und Mittel zum Vergleich dieses Abstandes mit den Soll-Werten des Abstandes an Positionen aufweist, die den Messpositionen entsprechen.

10. Vorrichtung nach dem Anspruch 9, **dadurch gekennzeichnet, dass** die berührungslosen Messsonden (11) im Messkopf (12) in mindestens einer Reihe angeordnet sind, die senkrecht zur Richtung der gegenseitigen Bewegung des Messkopfes (12) und des Messtisches (3) verläuft.

11. Vorrichtung nach einem der Ansprüche 9 bis 10, **dadurch gekennzeichnet, dass** der Messkopf (12) in der Messebene senkrecht zur Richtung der gegenseitigen Bewegung des Messkopfes (12) und des Messtisches (3) verstellbar gelagert ist.

12. Vorrichtung nach einem der Ansprüche 9 bis 11, **dadurch gekennzeichnet, dass** der Messkopf (12) an den Enden klappbare Arme (10) aufweist, an denen die berührungslosen Messsonden (11) ebenfalls gelagert sind.

13. Vorrichtung nach einem der Ansprüche 9 bis 12, **dadurch gekennzeichnet, dass** die berührungslosen Messsonden (11) durch konfokale Sonden oder Ultraschallsonden gebildet werden.

14. Vorrichtung nach einem der Ansprüche 9 bis 13, **dadurch gekennzeichnet, dass** die Stützen (4) und die Anschläge (5) auf magnetischen Klemmen (15) gelagert sind, die relativ zur Messfläche (31) verschiebbar und in einer bestimmten Position auf der Messfläche (31) des Messtisches (3) positionierbar sind.

15. Vorrichtung nach einem der Ansprüche 9 bis 13, **dadurch gekennzeichnet, dass** die Stützen (4) und die Anschläge (5) an Messpunkten auf der Platte eines Pseudomodells (18) fest gelagert sind, das auf der Messfläche (31) des Messtisches (3) mittels Befestigungsdorne (19) befestigt werden kann, die seine Position definieren.

## Revendications

1. Procédé de détection sans contact de la précision géométrique de la forme d'un vitrage automobile (6) spatialement courbé dans « car position », comprenant les étapes suivantes
- sur la surface de mesure (31) de la table de mesure (3) en position horizontale, au moins trois supports (4) sont fixés/placés aux points de mesure, désignés comme points RPS par le fabricant du vitrage ou du véhicule, pour un contact de points avec le vitrage automobile mesuré (6) et, le long du périmètre prévu du vitrage automobile mesuré (6), au moins trois butées (5) sont placées aux emplacements désignés par le fabricant afin de délimiter la position du vitrage automobile mesuré (6)
- le vitrage automobile (6) est placé sur les supports (4) aux points RPS et entre les butées (5) disposées sur la surface de mesure (31) de la table de mesure (3),
- la table de mesure (3) pivote avec la tête de mesure (12) autour de l'axe de rotation horizontal et s'arrête dès que le vitrage automobile (6) atteint la position « car position »,
- dans une direction parallèle à l'axe de rotation de la table de mesure (3), la tête de mesure (12), équipée de plusieurs sondes de mesure sans contact (11) dirigées vers la surface de mesure (31), est déplacée au-dessus de la surface du vitrage automobile (6), tandis que pendant le mouvement réciproque de la tête de mesure (11) et du vitrage automobile mesuré (6), la distance entre les sondes de mesure sans contact (11) et la surface du vitrage automobile mesuré (6) est évaluée à des positions prédéfinies et comparée aux valeurs de distance requises dans des positions correspondant aux positions de mesure, tandis que la distance entre les sondes de mesure sans contact (11) et la surface de mesure (31) de la table de mesure (3) est constante.

2. Procédé selon la revendication 1, **caractérisé en ce que,** dans « car position », le vitrage automobile (6) mesuré est posé sur toutes les butées (5) et tous les supports (4) disposés sur la surface de mesure (31).

3. Procédé selon la revendication 1 ou 2, **caractérisé en ce que** les valeurs mesurées des distances entre les sondes de mesure (11) et la surface du vitrage automobile mesuré (6) sont comparées aux valeurs des distances aux points correspondants du modèle CAD du vitrage automobile (6) concerné.

4. Procédé selon l'une des revendications précédentes, **caractérisé en ce que** les supports (4) et les butées (5) sont disposés sur des fixations magnétiques (15) qui se déplacent manuellement sur la surface de mesure (31) de la table de mesure (3) dans le sens des coordonnées **x, y** jusqu'à la position prédéterminée des points de mesure, tandis que la position est réglée à l'aide d'un faisceau laser perpendiculaire au plan de la surface de mesure (31) de la table de mesure (3), la hauteur des supports (4) est réglée individuellement en fonction de la forme du vitrage automobile mesuré (6) à la taille de la coordonnée (z) du point de mesure correspondant.

5. Procédé selon l'une des revendications de 1 à 3, **caractérisé en ce que** les supports (4) et les butées (5) sont disposés sur des fixations magnétiques (15) qui sont réparties sur la surface de mesure (31) de la table de mesure (3) dans le sens des coordonnées **x, y** à l'aide d'un répartiteur (13) dans une position prédéterminée des points de mesure, la hauteur des supports (4) est réglée individuellement en fonction de la forme du vitrage automobile mesuré (6) à la taille de la coordonnée **(z)** du point de mesure correspondant, soit avant la répartition, soit après le placement du support (4) dans les coordonnées **x, y** correspondantes.

6. Procédé selon l'une des revendications de 1 à 3, **caractérisé en ce que** les supports (4) et les butées (5) sont fixés aux points de mesure sur une plaque de pseudo-maquette (18) qui est disposée sur la table de mesure (3) sur des broches de fixation (19) qui définissent sa position.

7. Procédé selon l'une des revendications précédentes, **caractérisé en ce que** les sondes de mesure sans contact (11) sont constituées de sondes confocales qui émettent des rayons de lumière blanche vers la surface du produit mesuré (6) et suivent le rayon reflété par la surface du produit mesuré (6) et évaluent la longueur d'onde du rayon reçu, à partir de laquelle elles déterminent la distance par rapport à la surface du produit mesuré (6).

8. Procédé selon l'une des revendications de 1 à 7, **caractérisé en ce que** les sondes de mesure sans contact (11) sont constituées de sondes à ultrasons.

9. Dispositif de détection sans contact de la précision géométrique de la forme d'un vitrage automobile (6) spatialement courbé en « car position », comprenant une table de mesure (3) et un cadre (1) sur lequel est montée de manière pivotante ladite table de mesure (3) avec une surface de mesure (31) pour la pose du vitrage automobile mesuré (6), tandis que la table de mesure (3) est couplée à un entraînement (2) qui fait partie dudit dispositif et qui est également monté sur le cadre (1) et configuré de manière à servir à incliner la table de mesure (3) avec la surface de mesure (31) et le vitrage automobile mesuré autour d'un axe horizontal, tandis que la surface de mesure (31) est capable de prendre la position horizontale et la « car position » pour le vitrage automobile mesuré (6) correspondant, tandis que le dispositif comprend en outre des guides linéaires (7), des chariots (9) et une traverse (8) configurés de telle sorte que, sur les bords de la table de mesure (3), parallèlement à l'axe horizontal de rotation de la table de mesure (3), sont placés lesdits guides linéaires (7) sur lesquels sont montés de manière réglable lesdits chariots (9) qui dépassent au-dessus de la surface de mesure (31) et qui sont reliés par ladite traverse (8), dans laquelle sont formés, à des emplacements définis, des orifices, dans lesquels sont disposées des sondes de mesure sans contact (11) qui, avec celle-ci, forment une tête de mesure (12), tandis que le vitrage automobile mesuré (6) peut être positionné sur au moins trois supports (4) disposés sur la surface de mesure (31) en points RPS et sa position est délimitée sur le pourtour par au moins trois butées (5) disposées sur la surface de mesure (31) à des emplacements déterminés par le fabricant du vitrage automobile ou du véhicule et en « car position », tandis que les supports et les butées font partie du dispositif et sont configurés de telle sorte que le vitrage automobile mesuré (6) repose sur toutes les butées (5) et sur tous les supports (4) disposés sur la surface de mesure (31), tandis que les sondes de mesure sans contact (11) sont reliées à l'unité de commande qui fait partie du dispositif et qui est équipée de moyens d'évaluation de la distance (z) de la sonde de mesure sans contact (11) par rapport à la surface supérieure du vitrage automobile spatialement courbé mesuré (6) dans les coordonnées correspondantes (**x, y**) et des moyens pour comparer cette distance avec les valeurs de distance requises dans les positions correspondant aux positions de mesure.

10. Dispositif selon la revendication 9, **caractérisé en ce que** les sondes de mesure sans contact (11) sont disposées dans la tête de mesure (12) en au moins une rangée perpendiculaire à la direction du mouvement partagé par la tête de mesure (12) et la table de mesure (3).

11. Dispositif selon l'une des revendications de 9 à 10, **caractérisé en ce que** la tête de mesure (12) est disposée de manière réglable dans le plan de mesure dans une direction perpendiculaire à la direction du mouvement partagé par la tête de mesure (12) et la table de mesure (3).

12. Dispositif selon l'une des revendications de 9 à 11, **caractérisé en ce que** la tête de mesure (12) est pourvue, à ses extrémités, de bras rabattables (10) dans lesquels sont également disposées des sondes de mesure sans contact (11).

13. Dispositif selon l'une des revendications de 9 à 12, **caractérisé en ce que** les sondes de mesure sans contact (11) sont constituées de sondes confocales ou de sondes à ultrasons.

14. Dispositif selon l'une des revendications de 9 à 13, **caractérisé en ce que** les supports (4) et les butées (5) sont disposés sur des fixations magnétiques (15) déplaçables par rapport à la surface de mesure (31) et réglables dans une position déterminée sur la surface de mesure (31) de la table de mesure (3).

15. Dispositif selon l'une des revendications de 9 à 13, **caractérisé en ce que** les supports (4) et les butées (5) sont disposés de manière fixe dans des points de mesure sur une plaque de pseudo-maquette (18) qui peut être fixée sur la surface de mesure (31) de la table de mesure (3) à l'aide de broches de fixation (19) qui définissent sa position.
